Europäisches Patentamt

European Patent Office

Office européen des brevets

(19)

(11) Veröffentlichungsnummer : **0 109 528**
**B1**

(12) **EUROPÄISCHE PATENTSCHRIFT**

(45) Veröffentlichungstag der Patentschrift :
30.07.86

(51) Int. Cl.⁴ : **F 16 B 25/00**

(21) Anmeldenummer : **83110115.9**

(22) Anmeldetag : **11.10.83**

(54) Selbstschneidender Gewindeeinsatz.

(30) Priorität : **23.11.82 DE 3243255**
**14.12.82 DE 3246179**

(43) Veröffentlichungstag der Anmeldung :
**30.05.84 Patentblatt 84/22**

(45) Bekanntmachung des Hinweises auf die Patenterteilung : **30.07.86 Patentblatt 86/31**

(84) Benannte Vertragsstaaten :
**AT BE CH FR GB IT LI NL SE**

(56) Entgegenhaltungen :
**AT-B-   339 673**
**DE-A- 2 524 980**
**US-A- 4 069 730**
**Druckschrift 20 "Gewinde für Metalle" der Firma**
**Kerb-Konus-Vetriebs-GmbH, D-8420 Amberg(DE)**

(73) Patentinhaber : **Kerb-Konus-Vertriebs-GmbH**
**Dr. Carl-Eibes-Strasse**
**D-8454 Schnaittenbach (DE)**

(72) Erfinder : **Stöveken, Bernhard**
**Rathausstrasse 31**
**D-8451 Haselmühl (DE)**

(74) Vertreter : **Charrier, Rolf, Dipl.-Ing.**
**Postfach 260 Rehlingenstrasse 8**
**D-8900 Augsburg 31 (DE)**

EP 0 109 528 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen selbstschneidenden Gewindeeinsatz mit einem Außengewinde, das die Steigung T aufweist, und einem sich in axialer Richtung erstreckenden, quer zur Gewindeachse verlaufenden Schneidschlitz und einer Anfasung am Einschraubende des Gewindeeinsatzes, der in eine glatte Aufnahmebohrung eines Werkstücks einschraubbar ist, wobei das Gewindeprofil des Schneidschlitzes ein Innengewinde in die Aufnahmebohrung einschneidet.

Derartige Gewindeeinsätze dienen zur Herstellung von hochbelastbaren, verschleißfesten und vibrationssicheren Schraubverbindungen in Werkstoffen mit geringer Scherfestigkeit, wie beispielsweise Leichtmetallegierungen, Gußeisen, Messing, Bronze, Nichteisenmetalle, Kunststoffe, Schichtstoffe und Harthölzer. Sie sind üblicherweise mit einem Innengewinde versehen, in welches eine Schraube einschraubbar ist. Es ist jedoch auch bekannt, daß derartige Gewindeeinsätze einen Gewindebolzen aufweisen, welcher über die Aufnahmebohrung des Werkstücks hervorsteht.

Von derartigen Gewindeeinsätzen wird gefordert, daß sie im eingeschraubten Zustand ein relativ hohes Ausdrehmoment und eine hohe Auszugsfestigkeit aufweisen. Bei einem Gewindeeinsatz mit einem Außengewinde von beispielsweise 10 mm Durchmesser soll der Durchmesser der Aufnahmebohrung bei einem Werkstück aus weichem Material etwa 8,6 bis 8,8 mm betragen, während für harte, spröde Werkstoffe der Durchmesser der Aufnahmebohrung zwischen 8,9 und 9,2 mm liegen soll. Weist ein derartiger Gewindeeinsatz eine Länge von 14 mm auf, dann soll die Aufnahmebohrung mindestens 17 mm tief sein. Die Anfasung ist etwa 4,5 mm lang und der Schneidschlitz etwa 7 mm tief.

Es zeigt sich, daß bei diesen selbstschneidenden Gewindeeinsätzen das Ein- und das Ausdrehmoment sowie Auszugsfestigkeit in einem relativ weiten Bereich variieren und sehr häufig nicht die gewünschten Werte aufweisen.

Die Auszugsfestigkeit ist im wesentlichen linear abhängig von der Länge des zylindrischen vom Schneidschlitz nicht geschnittenen Teils des Einsatzes.

Durch den eingefrästen Schlitz und durch das abgeflachte Gewindeprofil bei der Anfasung trägt dieser Bereich des Gewindeeinsatzes nicht oder nur unbedeutend zur Auszugsfestigkeit bei.

Das Ausdrehmoment hängt im wesentlichen davon ab, wie tief der Einsatz das Innengewinde der Aufnahmebohrung vorschneidet. Ein in voller Tiefe eingeschnittenes Gewinde verursacht wenig Reibung zwischen dem Außengewinde am zylindrischen Teil des Einsatzes und dem Innengewinde und ergibt somit ein nur geringes Ausdrehmoment. Bei einem zu wenig tief eingeschnittenen Innengewinde klemmt der Einsatz beim Eindrehen und kann dann überhaupt nicht in die Aufnahmebohrung eingedreht werden. Die optimale Einschneidtiefe wird erreicht, wenn der Schneidschlitz wesentlich tiefer ist als die Länge der Anfasung, damit mehrere vollständig ausgebildete Gewindeschneidprofile am Schlitz im Bereich des zylindrischen Teils des Einsatzes vorhanden sind. Das Ausdrehmoment wird jedoch hierdurch niedriger als gewünscht. Außerdem wird durch den tiefen Schneidschlitz die Auszugsfestigkeit vermindert.

Bei den bekannten Gewindeeinsätzen Druckschrift 20 « Gewinde für Metalle » der Anmelderin ist der Verlauf des Außengewindes rein zufällig zur Lage des Schneidschlitzes. Das Schneidkantenprofil am Schneidschlitz ist also von Gewindeeinsatz zu Gewindeeinsatz unterschiedlich. Durch die unterschiedlichen Schneidkantenprofile ergeben sich sowohl unterschiedliche Eindrehmomente als auch bei stets gleicher Anfasung und Schneidschlitztiefe eine unterschiedliche Anzahl vollständiger Gewindeschneidprofile längs des Schneidschlitzes und damit unterschiedliche Ein- und Ausdrehmomente. In der Praxis muß aber sichergestellt werden, daß auch im ungünstigsten Fall genügend vollständige Gewindeschneidprofile vorhanden sind, damit der Einsatz beim Eindrehen nicht klemmt. Auch aus diesem Grund wird der Schneidschlitz tiefer gemacht als dies eigentlich notwendig wäre. Dadurch wird das durchschnittliche Ausdrehmoment und die Auszugsfestigkeit vermindert, deren Werte jedoch relativ breit streuen.

Außerdem ergeben sich bei den bekannten Gewindeeinsätzen durch unterschiedliche Schneidprofile auch unterschiedliche Schneidfähigkeiten. Um auch im ungünstigsten Fall noch eine ausreichende Schneidfähigkeit zu erzielen, muß die Anfasung relativ lang ausgeführt werden.

Bei den bekannten Gewindeeinsätzen wird somit die Anfasung relativ lang und der Schneidschlitz relativ tief ausgeführt. Dies bedeutet praktisch eine Überdimensionierung von Schneidschlitz und Anfasung, wodurch insgesamt die Gewindeeinsätze länger sind, als dies eigentlich erforderlich wäre. Die lange und damit flache Anfasung hat bei machen Werkstoffen zur Folge, daß der Gewindeeinsatz sich nicht in die Aufnahmebohrung einschneidet sondern mahlt.

Voraussetzung für einen einwandfreien Festsitz des Gewindeeinsatzes im Werkstück ist weiterhin ein spielfreier Sitz zwischen dem Außengewinde des Gewindeeinsatzes und dem durch den Gewindeeinsatz in die Aufnahmebohrung eingeschnittenen Innengewinde. Dieser spielfreie Festsitz ist bei den seither üblichen Gewindeeinsätzen nicht immer gewährleistet. Es zeigte sich, daß das vom Gewindeeinsatz in der Aufnahmebohrung eingeschnittene Innengewinde zu groß ist, was bedeutet, daß der Gewindeeinsatz locker in der Aufnahmebohrung sitzt und leicht herausgedreht werden kann. Der Grund dafür, daß der Gewindeeinsatz ein zu großes Innengewinde in der Aufnahmebohrung schneidet ist in einer Gratbildung beim Außengewinde am Grund des Schneidschlitzes zu sehen.

Bei den bekannten Gewindeeinsätzen verläuft der Grund des Schneidschlitzes rechtwinklig zur Achse des Gewindeeinsatzes. Der Schneidschlitz wird durch Fräsen erzeugt. Wenn der Grund des Schneidschlitzes nur einen Teil einer Gewindeflanke des Außengewindes stehen läßt bzw. schneidet dann wird infolge des Drucks zwischen Fräser und Gewindeeinsatz der verbleibende Gewindeprofilrest in den benachbarten Grund des Gewindeprofils gepresst bzw. gebogen. Dieser in einen Gewindegrund gebogene Profilrest schneidet dann beim Eindrehen des Gewindeeinsatzes in die Aufnahmebohrung zusätzliches Material aus der Wandung der Aufnahmebohrung.

Es besteht die Aufgabe, den Gewindeeinsatz so auszubilden, daß die Ein- und Ausdrehmomente und die Auszugsfestigkeit möglichst konstant sind, sich möglichst hohe Ausdrehmomente und Auszugsfestigkeiten ergeben und der Gewindeeinsatz relativ kurz ausgebildet werden kann.

Bei einem Gewindeeinsatz der eingangs genannten Art wird diese Aufgabe gelöst durch die kennzeichnenden Merkmale des Anspruches 1. Vorteilhafte Ausgestaltungen sind den Unteransprüchen entnehmbar.

Ausführungsbeispiele werden nachfolgend anhand der Zeichnung näher erläutert. Es zeigen :

Figur 1 eine Seitenansicht einer teilweise im Schnitt dargestellten Gewindebüchse mit Innengewinde ;

Figur 2 die Ansicht einer Schneidkante ;

Figur 3 die Ansicht einer weiteren Schneidkante ;

Figur 4 die Seitenansicht einer Gewindebüchse mit einer ersten Ausführungsform einer Anfasung ;

Figur 5 die Seitenansicht einer weiteren Gewindebüchse mit einer zweiten Ausführungsform einer Anfasung und

Figur 6 eine im Bereich des Schlitzes geschnittene Büchse.

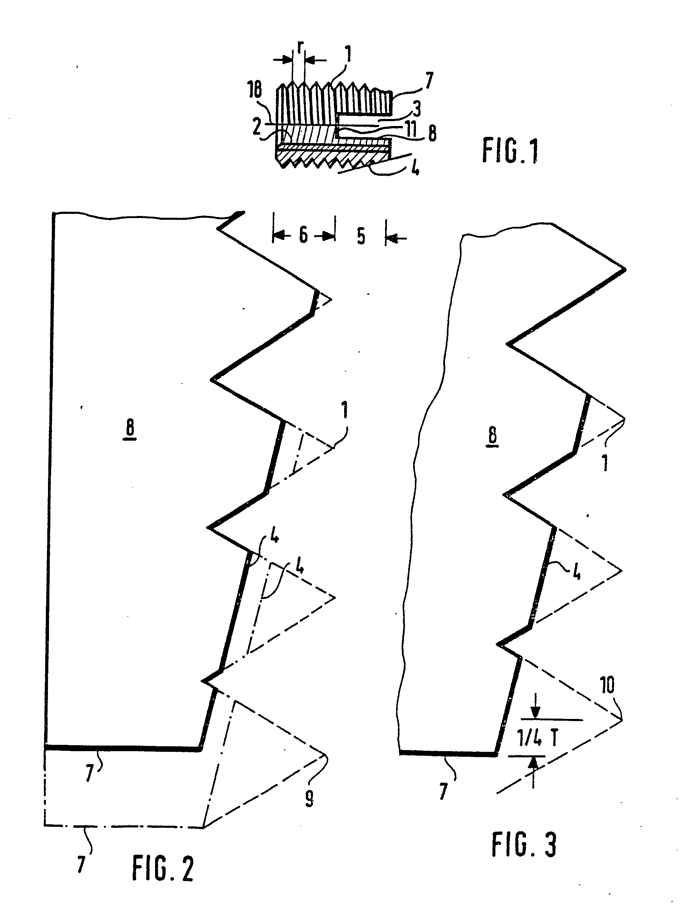

Die zylindrische Gewindebüchse nach Fig. 1 weist ein Außengewinde 1 auf. Im Inneren der Gewindebüchse ist ein Innengewinde 2 vorgesehen. Am Einschraubende der Gewindebüchse ist diese mit einem durchgehenden Schlitz 3 versehen. Weiterhin weist die Gewindebüchse am Einschraubende eine Anfasung 4 auf. Wird diese Gewindebüchse in eine glatte Bohrung eingeschraubt, dann wirken die vom Schlitz 3 geschnittenen Flanken des Außengewindes 1 als Schneidkanten, die ein Innengewinde in die Aufnahmebohrung einschneiden. Die Länge 5 der Gewindebüchse entsprechend der Tiefe des Schlitzes 3 hat also die Funktion eines Gewindeschneiders, trägt jedoch zur Verankerung der Gewindebüchse in der Aufnahmebohrung wenig bei. Für die Verankerung bestimmend ist in erster Linie die restliche Länge 6 der Gewindebüchse.

Bei den bekannten Gewindebüchsen ist die Lage des Schlitzes 3 in Bezug auf die Lage des Außengewindes 1 bzw. dessen Anfang an der Stirnseite 7 nicht definiert. Die sich hierdurch ergebenden unterschiedlichen schneidkantenprofile im Bereich des Schlitzes 3 werden anhand der Fig. 2 und 3 erläutert.

In Fig. 2 und 3 ist dargestellt die Schlitzfläche 8 in Fig. 1 Wird der Gewindeeinsatz in die Aufnahmebohrung eingeschraubt, dann wirkt das von der Schlitzfläche 8 geschnittene Außengewindeprofil als Schneidkantenprofil. Gleiches gilt bei der diagonal gegenüberliegenden Schlitzfläche.

Gemäß Fig. 2 sei angenommen, daß eine Gewindespitze 9 am Schnittpunkt der Stirnfläche 7 und der Schlitzfläche 8 liegt. Das sich dann ergebende Schneidkantenprofil ist in Fig. 2 dargestellt. Gem. Fig. 3 ist das Außengewinde 1 gegenüber dem Außengewinde nach Fig. 2 um 90° versetzt, d. h. die Gewindespitze 10 weist zur Stirnfläche 7 einen Abstand von 1/4 der Gewindesteigung auf. Wie der Vergleich der Fig. 2 und 3 deutlich zeigt, ergibt sich hierdurch ein völlig anderes Schneidkantenprofil. Diese unterschiedlichen Schneidkantenprofile führen zu unterschiedlichen Eindrehmomenten und zu unterschiedlichen Schneideigenschaften.

Die vorliegende Erfindung geht davon aus, die Relativlage zwischen Außengewinde 1 und Schlitz 3 stets eindeutig zu definieren, wodurch erreicht wird, daß bei den Gewindebüchsen z. B. stets nur das Schneidkantenprofil nach Fig. 2 oder stets nur das Schneidkantenprofil nach Fig. 3 vorliegt. Welches der Schneidkantenprofile günstiger ist, hängt ab von der Art des Materials des Werkstücks, in dessen Aufnahmebohrung der Gewindeeinsatz eingesetzt wird.

Die der Schlitzfläche 8 jeweils diametral gegenüberliegende Schlitzfläche schneidet dort das Außengewinde um eine halbe Gewindesteigung versetzt wobei das dort sich ergebende Schneidkantenprofil in Fig. 2 strichpunktiert angedeutet ist.

Weisen die beiden diametral einander gegenüberliegenden Schlitzflächen, die als Schneidkanten dienen, bei allen Gewindeeinsätzen stets die gleichen Schneidkantenprofile auf, dann braucht die Tiefe des Schlitzes 3 nicht wesentlich tiefer zu sein als die Länge der Anfasung 4. Dies bedeutet also, daß sich der Schlitz 3 beispielsweise nur um einen oder zwei Gewindegänge in den zylindrischen Teil des Gewindeeinsatzes erstreckt. Ein zu tiefes Ausschneiden des Innengewindes in der Aufnahmebohrung wird hierdurch vermieden, wodurch das Ausdrehmoment und die Auszugsfestigkeit erhöht. werden. Gleichzeitig wird erreicht, daß die Länge 5 der Gewindebüchse, die wenig zur Erhöhung der Auszugsfestigkeit beiträgt, auf ein Mindestmaß. reduziert wird. Die Gewindeeinsätze werden hierdurch kürzer. Gleichzeitig werden die Ein- und Ausdrehmomente wesentlich vergleichmäßigt.

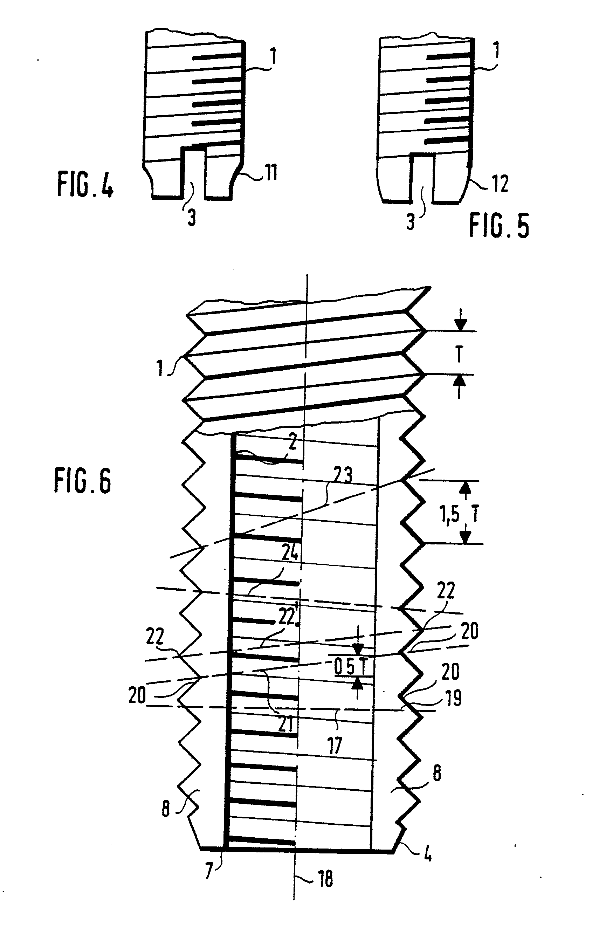

Liegt eine eindeutige Lagezuordnung zwischen der Lage des Schlitzes 3 und dem Ort des Beginns des Außengewindes 1 an der Stirnfläche 7 und damit eine eindeutige Lagezuordnung zwischen Schlitz 3 und Gewinde 1 vor, dann ist es auch möglich, die Form der Anfasung 4 dem jeweiligen Einsatzzweck anzupassen. In Fig. 4 ist die Anfasung 11 im wesentlichen konkav ausgebildet. Die Anfasung 12 nach Fig. 5 dagegen ist im wesentlichen konvex ausgebildet. Die jeweils günstigere Form hängt ab von der Art des Materials, in welche die Gewindebüchse eingesetzt wird. Die konkave Form nach Fig. 4 ist beispielsweise primär geeignet für relativ weiche Werkstoffe, während die Form nach Fig. 5 für sprödere Werkstoffe geeignet ist.

Weisen die Gewindeeinsätze untereinander jeweils gleiches Schneidkantenprofil auf, dann ist es möglich, beim Einsetzen der Gewindeeinsätze in die Aufnahmebohrung auf Tiefenanschläge und Rutschkupplungen beim Eindrehwerkzeug zu verzichten. Es genügt, wenn die Einsätze jeweils über der Aufnahmebohrung positioniert und mit einer vorbestimmten Anzahl von Umdrehungen eingedreht werden. Die Einsätze werden also jeweils auf die gleiche Eindrehtiefe eingedreht und weisen im eingedrehten Zustand zueinander gleiches Ausdrehmoment und Ausreißfestigkeit auf. Vorausgesetzt hierbei ist natürlich, daß die Durchmesser der Aufnahmebohrungen zueinander gleich sind.

Nachfolgend wird ein weiterer beim Stand der Technik vorhandener Nachteil erläutert. Bei den bekannten Gewindeeinsätzen verläuft der Schlitzgrund 17 rechtwinklig zur Achse 18 des Gewindeeinsatzes. Bei der rechten Schlitzfläche 8 schneidet der Schlitzgrund 17 eine Restflanke 19 des Außengewindes, welche infolge des Fräsdrucks beim Einfräsen des Schneidschlitzes 3 in den benachbarten Grund 20 des Außengewindes gedrückt wird und somit zuviel Material beim Schneiden des Innengewindes der Aufnahmebohrung aus der dortigen Wand ausschneidet.

Dieser Nachteil wird vermieden, wenn der Schlitzgrund 21 nicht rechtwinklig sondern schräg zur Achse 18 verläuft, seine Neigung beispielsweise gleich der halben Steigung T des Außengewindes ist und der Schlitzgrund 21 das Außengewinde 1 am Gewindegrund 20 schneidet. Der Gewindegrund 21 verläuft somit parallel zur durch die Steigung T bedingten Neigung des Außengewindes 1. Es ist somit ausgeschlossen, daß sowohl bei der Schlitzfläche 8 als auch bei der linken Schlitzfläche 8' ein Gewindeprofilrest stehen bleibt. Der Schlitz 3 kann hierbei maximal so tief eingefräst werden, daß bei den Schlitzflächen 8, 8' jeweils die Gewindespitzen 22 vom Schlitzgrund 21' geschnitten werden.

Der Schlitzgrund 21 bzw. 21' verläuft also geneigt zur Senkrechten auf die Achse 18 des Gewindeeinsatzes, die Neigung beträgt 0,5 T und der Schlitzgrund 21 bzw. 21' schneidet das Außengewinde 1 etwa zwischen Gewindegrund 20 und Gewindespitze 22. Der Schlitzgrund 21 bzw. 21' ist in Richtung der Steigung T des Außengewindes 1 geneigt.

Die Neigung kann beispielsweise auch 1,5 T betragen, wie dies durch den Schlitzgrund 23 angedeutet ist. Der Schlitzgrund kann als weitere Alternative auch entgegen der Richtung der Steigung T des Außengewindes 1 geneigt sein, wie dies beispielhaft durch den Schlitzgrund 24 angedeutet ist.

Handelt es sich um ein Außengewinde 1 geringer Steigung, dann kann die Neigung des Schlitzgrundes 21 bzw. 23 bzw. 24 auch 2,5 T oder 3,5 T usw. betragen. Bevorzugt verläuft in seinem Nennmaß der Schlitzgrund im Bereich zwischen dem Schlitzgrund 21 und dem Schlitzgrund 21', wobei unter Berücksichtigung der Fertigungstoleranzen der Schlitzgrund 21 die minimale und der Schlitzgrund 21' die maximale Schlitztiefe des Schlitzes 3 darstellen.

Verläuft der Schlitzgrund entsprechend dem Schlitz grund 21', dann bleibt bei den Schlitzflächen 8 und 8' jeweils noch das halbe Profil eines Gewindeganges des Außengewindes 1 stehen. Dieses halbe Profil widersteht dem Fräsdruck und wird nicht in den benachbarten Gewindegrund gedrückt.

## Patentansprüche

1. Selbstschneidender Gewindeeinsatz mit einem Außengewinde (1), das die Steigung T aufweist, und einem sich in axialer Richtung erstreckenden, quer zur Gewindeeinsatzachse verlaufenden Schneidschlitz (3) und einer Anfasung (11, 12) am Einschraubende des Gewindeeinsatzes, der in eine glatte Aufnahmebohrung eines Werkstücks einschraubbar ist, wobei das Gewindeprofil des Schneidschlitzes (3) ein Innengewinde in die Aufnahmebohrung einschneidet, dadurch gekennzeichnet, daß der Beginn des Außengewindes (1) an der Stirnfläche (7) des Einschraubendes im wesentlichen eine definierte Lage zum Schneidschlitz (3) aufweist, nur ein bestimmtes Schneidkantenprofil zu erhalten abhängig von der Art des Materials des Werkstücks, in dessen Aufnahmebohrung der Gewindeinsatz eingesetzt wird.

2. Gewindeeinsatz nach Anspruch 1, dadurch gekennzeichnet, daß der Schneidschlitz (3) etwa gleich tief wie die Anfasung (4, 11, 12) lang ist.

3. Gewindeeinsatz nach Anspruch 1, dadurch gekennzeichnet, daß der Schlitzgrund (21, 21', 23, 24) geneigt zur Senkrechten auf die Achse (18) des Gewindeeinsatzes verläuft, die Neigung x mal T beträgt, wobei x = 0,5 ; 1,5 ; 2,5 ; ... ist und der Schlitzgrund (21, 21', 23, 24) das Außengewinde (1) etwa zwischen Gewindegrund (20) und Gewindespitze (22) schneidet und somit mindestens ein halbes Gewindeprofil des Außengewindes (1) am Schlitzgrund verbleibt.

4. Gewindeeinsatz nach Anspruch 3, dadurch gekennzeichnet, daß der Schlitzgrund (21, 21', 23) in Richtung der Steigung (T) des Außengewindes (1) geneigt ist.

5. Gewindeeinsatz nach Anspruch 1 oder 2, dadurch gekennzeichnet, daß die Anfasung (11) im Querschnitt konkav ausgebildet ist.

6. Gewindeeinsatz nach Anspruch 1 oder 2, dadurch gekennzeichnet, daß die Anfasung (12) im Querschnitt konvex ausgebildet ist.

## Claims

1. Self-tapping threaded bush having an external thread (1), which comprises the pitch T, and having a cutting slot (3) extending in the axial direction and at right angles to the axis of the threaded bush, and a chamfer (11, 12) at the screw-in end of the threaded bush, which can be screwed into a smooth bore of a work piece, the thread profile of the cutting slot (3) cutting into an internal thread in the bore, characterised in that the beginning of the external thread (1) at the front surface (7) of the screw-in end substantially has a defined position in relation to the cutting slot (3) to obtain a defined cutting edge profile, regardless of the type of material of the work piece, in the bore of which the threaded bush is inserted.

2. Threaded bush according to Claim 1, characterised in that the depth of the cutting slot (3) is approx. the same as the length of the chamfer (4, 11, 12).

3. Threaded bush according to Claim 1, characterised in that the bottom of the slot (21, 21', 23, 24) is inclined to the perpendicular on the axis (18) of the threaded bush, the slope is x times T in which x = 0.5 ; 1.5 ; 2.5 ; ... and the bottom of the slot (21, 21', 23, 24) cuts the external thread (1) roughly between the bottom (20) and the crest (22) of the thread and consequently at least half a thread profile of the external thread (1) remains at the base of the slot.

4. Threaded bush according to Claim 3, characterised in that the base of the slot (21, 21', 23) is inclined in the direction of the pitch (T) of the external thread (1).

5. Threaded bush according to Claim 1 or 2, characterised in that the cross section of the chamfer (11) is concave.

6. Threaded bush according to Claim 1 or 2, characterised in that the cross section of the chamfer (12) is convex.

## Revendications

1. Insert auto-taraudeur avec un filetage mâle (1) avec un pas « T » et un évidement (3) centré, transversal par rapport à l'axe de l'insert et un chanfrein (11, 12) à l'extrémité insérée de l'insert, qui peut se visser dans un perçage de positionnement lisse d'une pièce à usiner, le profil de filetage de l'évidement (3) incisant un filetage femelle dans le perçage de positionnement, caractérisé en ce que le commencement du filetage mâle (1) à la surface extérieure (7) présente en substance une position définie par rapport à l'évidement (3), afin d'obtenir un certain profil de l'arête tranchante, dépendant du genre de matière utilisée pour la pièce à usiner, dans le perçage de positionnement de laquelle l'insert est placé.

2. Insert selon la revendication 1, caractérisé en ce que l'évidement (3) est environ de la même profondeur que la longueur du chanfrein (4, 11, 12).

3. Insert selon la revendication 1, caractérisé en ce que le fond (21, 21', 23, 24) est incliné perpendiculairement par rapport à l'axe (18) de l'insert, l'inclinaison est de x fois T, x = 0,5 ; 1,5 ; 2,5 ... et le fond de l'évidement (21, 21', 23, 24) incise de filetage mâle 1 à peu près entre le fond de l'insert (20) et le sommet de l'insert (22) de sorte qu'il reste au moins une moitié du profil de l'insert du filetage mâle (1) au fond de l'évidement.

4. Insert selon la revendication 3, caractérisé en ce que le fond de l'évidement (21, 21', 23) est incliné dans la direction du pas « T » du filetage mâle (1).

5. Insert selon l'une quelconque des revendications 1 ou 2, caractérisé en ce que le chanfrein (11) est concave dans la coupe en travers.

6. Insert selon l'une quelconque des revendications 1 ou 2, caractérisé en ce que le chanfrein (12) est convexe dans la coupe en travers.

FIG.1

FIG. 2

FIG. 3

1

FIG.4

FIG.5

FIG.6